# EUROPÄISCHE PATENTSCHRIFT

(11) **EP 3 270 114 B1**
(45) Veröffentlichungstag und Bekanntmachung des Hinweises auf die Patenterteilung: **14.04.2021**
(21) Anmeldenummer: 16179633.9
(22) Anmeldetag: 15.07.2016
(51) Int. Cl.: G01D 5/244, G01D 5/245, G01D 5/347, G06K 7/10

(54) **SENSORANORDNUNG**
SENSOR ASSEMBLY
SYSTÈME DE DÉTECTION

(43) Veröffentlichungstag der Anmeldung: 17.01.2018
(73) Patentinhaber: Leuze electronic GmbH + Co KG, 73277 Owen/Teck (DE)
(72) Erfinder: Lamparter, Thomas, 72584 Hülben (DE); Merk, Thomas, 73257 Köngen (DE)
(74) Vertreter: Ruckh, Rainer Gerhard

(56) Entgegenhaltungen:
- EP-A1- 1 403 623
- EP-A1- 2 930 472
- WO-A1-2008/056546
- DE-A1-102012 012 870
- JP-A- H04 279 817
- US-B1- 7 608 813

## Beschreibung

Die Erfindung betrifft eine Sensoranordnung.

Eine derartige Sensoranordnung kann beispielsweise von einem Positionssensor in Form eines Distanzsensors gebildet sein, mit dem die Entfernung zu einem kooperativen Ziel wie einem Reflektor gemessen wird. Der Distanzsensor kann ein optischer Sensor mit einem Lichtstrahlen emittierenden Sender und einem Lichtstrahlen empfangenden Empfänger sein, wobei die Distanzmessung nach dem Phasenmessprinzip oder mit einem Pulslaufzeitverfahren erfolgen kann.

Weiterhin kann die Sensoranordnung einen Positionssensor in Form eines Codelesers, insbesondere Barcodelesers aufweisen, wobei das kooperative Ziel dann in Form einer Marke mit einem Code gebildet ist, wobei in dem Code eine Positionsinformation kodiert ist.

Eine derartige Sensoranordnung ist aus der DE 199 10 933 B4 bekannt. Diese Sensoranordnung dient zur Positionierung eines Fahrzeugs an einem stationären Gegenstand, wobei das Fahrzeug entlang einer vorgegebenen Bahn entlang des Gegenstands verfahrbar ist. An den Gegenständen sind in vorgegebenen Abständen Kodierungen aufweisende Marken angebracht, welche mittels eines optischen Sensors am Fahrzeug erfassbar sind, wobei zur Absolutortsbestimmung des Fahrzeuges während einer Referenzfahrt die Kodierungen der Marken nacheinander erfasst und die dabei registrierten Messwerte als Referenzwerte abgespeichert werden.

Aus der DE 10 2005 047 658 B4 ist eine Vorrichtung mit einem von einer Anordnung von Marken gebildeten Positionsmaßsystem und mit einem optischen Sensor zur Erfassung der Marken des Positionsmaßsystems bekannt. Der optische Sensor und das Positionsmaßsystem sind relativ zueinander beweglich angeordnet. In jeder Marke ist deren Absolutposition innerhalb des Positionsmaßsystems als Kodierung enthalten. Dem optischen Sensor ist zur Ausbildung eines zweikanaligen, diversitären Sensorsystems ein Sensorelement fest zugeordnet, mittels dessen die Marken des Positionsmaßsystems oder Markierungen eines dem Positionsmaßsystem fest zugeordneten inkrementellen Maßsystems erfassbar sind. Die vom optischen Sensor und vom Sensorelement generierten Signale werden in einem redundant aufgebauten Auswertesystem miteinander verglichen, wodurch Fehler im optischen Sensor oder im Sensorelement aufgedeckt werden können.

Die JP H04 279817 A betrifft ein Längenmesssystem mit einem optischen Sensor und einem kapazitiven Sensor. Der kapazitive Sensor liest einen kapazitiven Code und generiert ein absolutes Signal. Der optische Code generiert ein inkrementelles Signal. Die Signale beider Sensoren werden durch eine Differenzbildung verglichen. Wenn die Differenz einen erlaubten Bereich übersteigt, wird ein Fehlersignal generiert.

Die EP Die EP 1 403 623 A1 betrifft ein Verfahren zur Bestimmung einer absoluten Position. Bei diesem wird ein Code redundant abgetastet, indem zusätzlich zu dem zur absoluten Positionsbestimmung notwendigen Codewort weitere Bits detektiert werden. Alle durch Abtasten gewonnenen Bits werden auf Zuverlässigkeit geprüft und einem als unzuverlässig erkannten Bit eine Fehlerkennung zugeordnet. Bei der Decodierung bleiben diese Bits mit einer Fehlerkennung unberücksichtigt.

Eine Sensoranordnung gemäß dem Oberbegriff des Anspruchs 1 ist aus der DE 10 2012 012 890 A1 bekannt. Dort ist ein Verfahren zum Betrieb eines mehrkanaligen Drehwinkelgebers beschrieben. Dieser umfasst eine Leiterplatte, auf der ein oder mehrere Funktionseinheiten als integrierte Bauteile angeordnet und miteinander verschaltet sind. Mindestens ein Positionswandler erzeugt absolute und inkrementale Messwerte, die jeweils über mindestens einen Kanal einer Kontrolleinheit zugeführt werden, welche als Regelungs- und Sicherheitsüberwachung ausgebildet ist und eine nachgeschaltete Maschine steuert. Der Drehwinkelgeber besteht aus mindestens drei Funktionseinheiten. In einer ersten Funktionseinheit ist der Positionswandler angeordnet, der in dieser Funktionseinheit absolute Lage-Positionswerte erzeugt, die über einen ersten sicheren Kanal durch eine als Interface geschaltete zweite Funktionseinheit als erste sichere Daten der Kontrolleinheit zuführt. Der Positionswandler leitet seine inkrementalen Messwerte einer dritten Funktionseinheit zu, die durch Umrechnung absolute Lage-Positionswerte erzeugt und über einen zweiten sicheren Kanal durch die zweite Funktionseinheit hindurch als zweite sichere Daten der Kontrolleinheit zuführt.

Der Erfindung liegt die Aufgabe zugrunde, eine Sensoranordnung der eingangs genannten Art derart auszubilden, dass diese eine hohe Fehlersicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem ersten Positionssensor und einem diesem zugeordnetem ersten kooperativem Ziel, welche einen Erfassungsbereich begrenzen. Durch Positionsmessungen werden mit dem ersten Positionssensor gegen das erste kooperative Ziel erste Positionsmesswerte erhalten. Weiterhin sind ein zweiter Positionssensor und ein diesem zugeordnetes zweites kooperative Ziel vorgesehen, welche den Erfassungsbereich begrenzen. Durch Positionsmessungen mit dem zweiten Positionssensor gegen das zweite kooperative Ziel werden zweite Positionsmesswerte erhalten. Mit einer Steuereinheit, in welcher die ersten und zweiten Positionsmesswerte der beiden Positionssensoren zu einer Verrechnungsgröße verrechnet werden, wird die Funktion der Positionssensoren kontrolliert. Die Positionssensoren arbeiten unabhängig voneinander und sind von nach einem Phasenmessverfahren oder nach einem Pulslaufzeitverfahren arbeitenden identisch ausgebildeten Distanzsensoren gebildet. Mittels derer werden Distanzmessungen gegen das jeweilige kooperative Ziel durchgeführt, wodurch mit den Distanzsensoren als Erfassungsbereich eine Messstrecke kontrolliert wird. Die Distanzsensoren können wahlweise auf derselben Seite oder auf gegenüberliegenden Seiten der Messstrecke angeordnet sein.

Der Grundgedanke der Erfindung besteht somit darin, dass die erfindungsgemäße Sensoranordnung zwei unabhängig voneinander arbeitende Sensorsysteme aufweist, die hinsichtlich ihres Aufbaus einander dahingehend entsprechen, dass diese jeweils einen Positionssensor und ein zugeordnetes kooperatives Ziel aufweisen. Damit generieren diese Sensorsysteme entsprechende, gegebenenfalls sogar identische Positionsmesswerte, die zu einer gemeinsamen Verrechnungsgröße verrechnet werden können. Durch die fortlaufende Kontrolle der Verrechnungsgröße, insbesondere durch einen Sollwertvergleich, kann auf einfache Weise kontrolliert werden, ob die Positionssensoren fehlerfrei arbeiten oder nicht. Dadurch ergibt sich eine hohe Funktionssicherheit der erfindungsgemäßen Sensoranordnung. Die Bildung der Verrechnungsgröße anhand der Positionsmesswerte der beiden Positionssensoren erfolgt in der Steuereinheit, die zur Erhöhung der Funktionssicherheit einen fehlersicheren, insbesondere redundanten Aufbau aufweisen kann.

Da die Sensoranordnungen zwei unabhängige Sensorsysteme mit jeweils einem Positionssensor und einem kooperativen Ziel aufweisen, sind unterschiedliche Konfigurationen und Anordnung der Sensorsysteme möglich. So können die Positionssensoren an demselben Rand des Erfassungsbereichs oder auch an gegenüberliegenden Rändern des Erfassungsbereichs angeordnet sein.

Je nach Konfiguration und Anordnung der Sensorsysteme kann auch die Verrechnungsgröße in geeigneter Weise gewählt werden. Insbesondere kann die Verrechnungsgröße die Summe oder die Differenz des ersten und zweiten Positionsmesswertes sein.

Besonders vorteilhaft wird die Sensoranordnung mit ihren Komponenten so ausgelegt, dass die Summe oder Differenz der ersten und zweiten Positionsmesswerte zeitlich konstant ist, so dass sich die Kontrolle der Verrechnungsgröße auf einen Sollwertvergleich reduziert, der besonders einfach durchgeführt werden kann.

Zweckmäßig ist eine fehlerfreie Funktion des Positionssensors gegeben, wenn die Verrechnungsgröße innerhalb eines vorgegebenen Toleranzbandes zeitlich konstant ist.

Durch den Sollwertvergleich der Verrechnungsgröße innerhalb des Toleranzbandes werden unvermeidliche Messwertschwankungen berücksichtigt und aufgefangen.

Gemäß einer vorteilhaften Ausführungsform ist wenigstens ein Positionssensor von einem optischen Sensor gebildet, welcher Lichtstrahlen emittiert und empfängt.

Erfindungsgemäß ist der Positionssensor als Distanzsensor ausgebildet, der nach einem Phasenmessverfahren oder einem Pulslaufzeitverfahren arbeitet.

Mit diesem Distanzsensor erfolgen dann vorteilhaft Distanzmessungen gegen einen Reflektor, insbesondere einen Retroreflektor, als kooperatives Ziel.

Mit einer solchen Sensoranordnung kann beispielsweise als Erfassungsbereich insbesondere eine Messstrecke exakt und genau kontrolliert werden. Werden zur Kontrolle der Messstrecke zwei, vorzugsweise identische Distanzsensoren eingesetzt, so können die Distanzsensoren wahlweise auf derselben Seite der Messstrecke oder auf gegenüberliegenden Seiten der Messstrecke angeordnet sein. Die Steuereinheit der Sensoranordnung kann vorteilhaft von einer Rechnereinheit gebildet sein. Diese Rechnereinheit kann lokal den Positionssensoren räumlich zugeordnet oder dezentral in einer Cloud vorhanden sein. Alternativ kann als Steuereinheit ein Frequenzumrichter vorgesehen sein.

Zur Kommunikation der Positionssensoren mit der Steuereinheit sind die Positionssensoren über gleiche oder unterschiedliche Schnittstellen an die Steuerung angeschlossen.

Ein besonders vorteilhafter Anwendungsfall besteht darin, dass die Positionsmaßsysteme stationär angeordnet sind, und dass die Positionssensoren auf einem Fahrzeug angeordnet sind.

Durch das Lesen der Positionsmarken mittels der Positionssensoren kann das Fahrzeug exakt am Positionsmaßsystem und damit an einem Gegenstand, an dem das Positionsmaßsystem angebracht ist, positioniert werden. Das Fahrzeug kann dabei von einem Regalbediengerät, einem Hängebahnförderer oder dergleichen gebildet sein.

Die Zeichnungen zeigen:
- Figur 1:: Schematische Darstellung einer nicht zur Erfindung gehörenden Sensoranordnung.
- Figur 2:: Blockschaltbild der Positionssensoren und der Steuereinheit gemäß Figur 1.
- Figur 3:: Erstes nicht zur Erfindung gehörendes Beispiel von Positionsmaßsystemen für die Sensoranordnung gemäß Figur 1.
- Figur 4:: Zweites nicht zur Erfindung gehörendes Beispiel von Positionsmaßsystemen für die Sensoranordnung gemäß Figur 1.
- Figur 5:: Drittes nicht zur Erfindung gehörendes Beispiel von Positionsmaßsystemen für die Sensoranordnung gemäß Figur 1.
- Figur 6:: Erstes nicht zur Erfindung gehörendes Beispiel von Positionsmaßsystemen für eine erste Variante der Sensoranordnung gemäß Figur 1.
- Figur 7:: Zweites nicht zur Erfindung gehörendes Beispiel von Positionsmaßsystemen für eine zweite Variante der Sensoranordnung gemäß Figur 1
- Figur 8:: Ringförmige Anordnung zweier Positionsmaßsystemen für eine weitere Sensoranordnung.
- Figur 9:: Zeitlicher Verlauf der Positionsmesswerte der Positionssensoren der Sensoranordnung gemäß Figur 8.

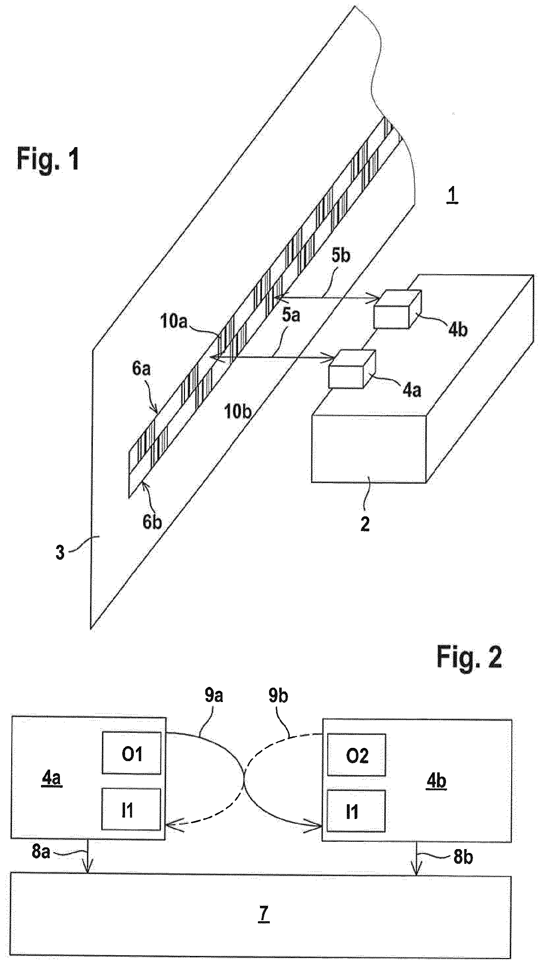

Figur 1 zeigt schematisch ein nicht zur Erfindung gehörendes Beispiel einer Sensoranordnung 1. Die Sensoranordnung 1 dient zur genauen Positionierung eines Fahrzeugs 2 relativ zu einem stationären Gegenstand 3. Im vorliegenden Fall ist das Fahrzeug 2 von einem Regalbediengerät gebildet, das an einem Regal positioniert wird.

Als erste Komponenten der Sensoranordnung 1 sind auf dem Fahrzeug 2 zwei Positionssensoren 4a, 4b in festem Abstand zueinander befestigt. Die Positionssensoren 4a, 4b sind im vorliegenden Fall als optische Sensoren und spezifisch als Barcodeleser ausgebildet. Jeder Positionssensor 4a, 4b umfasst dabei einen Lichtstrahlen 5a, 5b emittierenden Sender, einen Lichtstrahlen 5a, 5b empfangenden Empfänger und eine Auswerteeinheit, in welcher in Abhängigkeit der Empfangssignale des Empfängers Codes erkannt werden. Der Positionssensor 4a, 4b kann dabei als Scanner ausgebildet sein. In diesem Fall weist der Positionssensor 4a, 4b eine Ablenkeinheit wie zum Beispiel ein motorisch getriebenes, rotierendes Polygonspiegelrad auf, das die vom Sender emittierenden Lichtstrahlen 5a, 5b periodisch innerhalb eines Abtastbereichs ablenkt. In diesem Fall kann der Empfänger von einer einzelnen Photodiode gebildet sein. Alternativ kann der Positionssensor 4a, 4b als Empfänger einen Bildsensor wie eine CCD- oder CMOS-Matrix aufweisen, auf welcher der zu erfassende Code abgebildet wird. In diesem Fall wird keine Ablenkeinheit benötigt.

Jedem Positionssensor 4a, 4b ist als kooperatives Ziel ein Positionsmaßsystem 6a, 6b zugeordnet, das aus einem oder mehreren Positionsmaßbändern besteht. Jedes Positionsmaßband erstreckt sich im vorliegenden Fall entlang einer Geraden, wobei die Positionsmaßsysteme 6a, 6b parallel zueinander verlaufen. Zur Positionserfassung des Fahrzeugs 2 werden die Positionsmaßsysteme 6a, 6b von jeweiligen Positionssensoren 4a, 4b fortlaufend abgetastet.

Wie Figur 2 zeigt, sind die Positionssensoren 4a, 4b der Sensoranordnung 1 an eine Steuereinheit 7 angeschlossen, die im vorliegenden Fall von einer Rechnereinheit gebildet ist. Die Rechnereinheit kann einen fehlersicheren, redundanten Aufbau aufweisen. Alternativ kann die Steuereinheit 7 auch in einer Cloud vorgesehen sein. Schließlich kann die Steuereinheit 7 von einem Frequenzumrichter gebildet sein. Jeder Positionssensor 4a, 4b ist über seine Schnittstelle 8a, 8b an die Steuereinheit 7 angeschlossen. Die Schnittstellen 8a, 8b können identisch oder unterschiedlich ausgebildet sein. Beispiele für derartige Schnittstellen 8a, 8b sind EtherCat-, ProfiSafe- und Safe-SSI-Schnittstellen. Weiterhin ist eine direkte bidirektionale Datenverbindung zwischen den beiden Positionssensoren 4a, 4b vorgesehen, so dass diese direkt miteinander kommunizieren können. Diese Datenverbindung kann von einer bidirektionalen Datenleitung 9a, 9b gebildet sein. Im vorliegenden Fall weist der erste Positionssensor 4a einen Schaltausgang und einen Schalteingang auf. Ebenso weist der zweite Positionssensor 4b einen Schaltausgang und einen Schalteingang auf. Zur Ausbildung der bidirektionalen Datenverbindung ist von jedem Schaltausgang O1, O2 eines Positionssensors 4a eine unidirektionale Datenleitung 9a, 9b zum Schalteingang des jeweils anderen Positionssensors 4b geführt.

Die erfindungsgemäße Sensoranordnung 1 arbeitet generell derart, dass durch die Erfassung des kooperativen Zieles mit den Positionssensoren 4a, 4b fortlaufend Positionsmesswerte ermittelt werden, wobei in der Steuereinheit 7 die Positionsmesswerte beider Positionssensoren 4a, 4b zu einer Verrechnungsgröße verrechnet werden. Durch einen Sollwertvergleich der Verrechnungsgröße wird in der Steuereinheit 7 festgestellt, ob die Positionssensoren 4a, 4b fehlerfrei arbeiten.

Bei dem nicht zur Erfindung gehörenden Beispiel der Figur 1 besteht jedes Positionsmaßsystem 6a, 6b aus einer Linearanordnung von Positionsmarken 10a, 10b, wobei jede Positionsmarke 10a, 10b einen Code enthält, in welchem dessen Position innerhalb des Positionsmaßsystems 6a, 6b kodiert ist. Aus jeweils zeitgleich mit den Positionssensoren 4a, 4b aufgenommenen Positionsmesswerten werden dann die Verrechnungsgrößen gebildet, die vorteilhaft von der Summe oder Differenz der Positionsmesswerte gebildet sind.

Eine fehlerfreie Funktion der Positionssensoren 4a, 4b liegt dann vor, wenn die ermittelte Verrechnungsgröße innerhalb eines vorgegebenen Toleranzbandes mit einem in der Steuereinheit 7 abgespeicherten Sollwert übereinstimmt.

Zusätzlich können in den Positionsmaßsystemen 6a, 6b, vorzugsweise in äquidistanten Abständen, Testmarken vorgesehen sein. Sobald ein Positionssensor 4a eine solche Testmarke liest, wird in diesem ein Selbsttest initiiert, anhand dessen überprüfbar ist, ob der Positionssensor 4a, 4b fehlerfrei arbeitet. Das Ergebnis dieser Prüfung wird vom Positionssensor 4a, 4b an die Steuereinheit 7 gesendet.

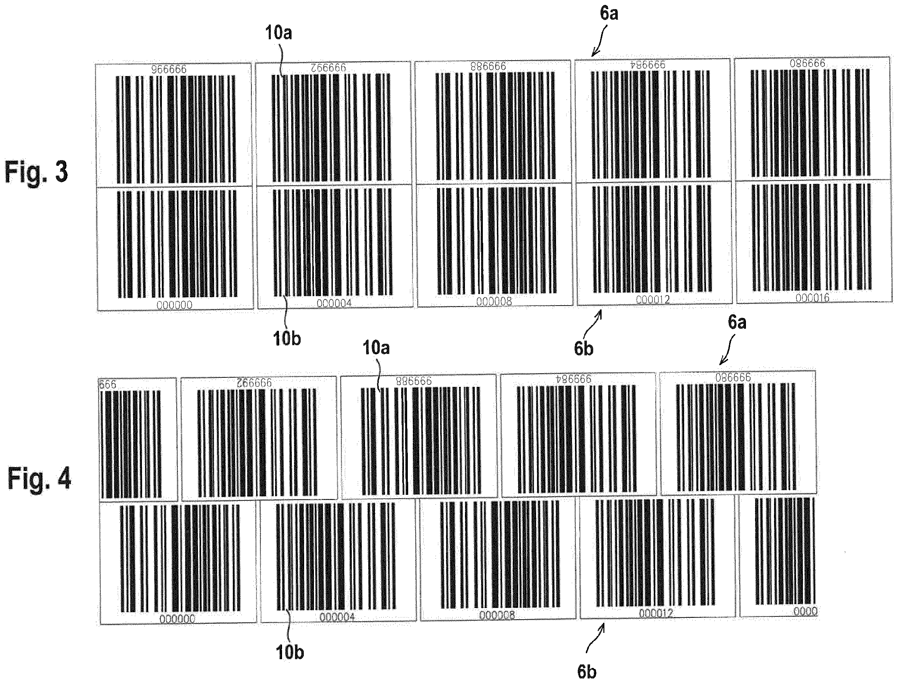

Figur 3 zeigt ein erstes nicht zur Erfindung gehörendes Beispiel der Positionsmaßsysteme 6a, 6b für die Sensoranordnung 1 gemäß Figur 1. Die Positionsmarken 10a, 10b beider Positionsmaßsysteme 6a, 6b sind von Barcodes gebildet, so dass dementsprechend die Positionssensoren 4a, 4b von scannenden Barcodelesern gebildet sind. In dem Positionsmarken 10a des ersten Positionsmaßsystems 6a sind als Positionsinformationen von links nach rechts aufsteigende Zahlenwerte kodiert. In den Positionsmarken 10b des zweiten Positionsmaßsystems 6b sind als Positionsinformationen von links nach rechts abfallende Zahlenwerte kodiert. Mit den beiden Positionssensoren 4a, 4b werden immer zwei übereinanderliegende Positionsmarken 10a, 10b detektiert. Da die Positionsmarken 10a aufsteigende Zahlenwerte kodieren und die Positionsmarken 10b abfallende Zahlenwerte kodieren, ist die Summe der Zahlenwerte und damit der Positionsmesswerte immer konstant. Diese Summe wird als Verrechnungsgröße in der Steuereinheit 7 durch einen Sollwertvergleich überprüft.

Damit der Positionssensor 4a nur die Positionsmarke 10a des ersten Positionsmaßsystems 6a und der Positionssensor 4b nur die Positionsmarke 10b des zweiten Positionsmaßsystems 6b liest, sind die Positionssensoren 4a, 4b vorteilhaft in unterschiedlichen Höhen am Fahrzeug 2 montiert. Zudem können die Positionsmarken 10a des ersten Positionsmaßsystems 6a in einer anderen Farbe als die Positionsmarken 10b des zweiten Positionsmaßsystems 6b dargestellt sein. Dann können die Positionssensoren 4a, 4b Licht unterschiedlicher Wellenlänge emittieren, so dass der Positionssensor 4a nur die Positionsmarke 10a und der Positionssensor 4b nur die Positionsmarke 10b lesen kann.

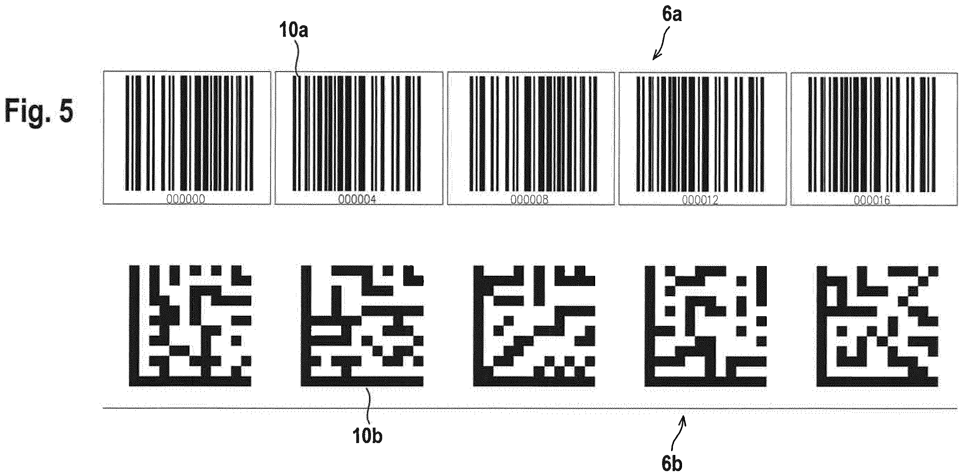

Die Anordnung von Figur 4 unterscheidet sich von der Anordnung der Figur 5 nur dadurch, dass die Positionsmarken 10a des ersten Positionsmaßsystems 6a etwas versetzt zu den Positionsmarken 10b des zweiten Positionsmaßsystems 6b angeordnet sind. Da der Versatz nur etwa der Hälfte einer Breite der Positionsmarken 10a, 10b entspricht, werden nach wie vor von den Positionssensoren 4a, 4b immer entsprechende Paare von Positionsmarken 10a, 10b erfasst, so dass die Positionsbestimmung völlig analog zum nicht zur Erfindung gehörenden Beispiel gemäß Figur 3 erfolgt.

Die Anordnung von Figur 5 unterscheidet sich von der Anordnung von Figur 3 nur dadurch, dass die Positionsmarke 10b des Positionsmaßsystems 6b nicht von Barcodes sondern von 2D-Codes gebildet sind. Diese werden von einem Positionssensor 4a, 4b gelesen, der einen Bildsensor als Empfänger aufweist. Ansonsten erfolgt die Auswertung analog zum nicht zur Erfindung gehörenden Beispiel gemäß Figur 3. Die 2D-Codes können als Datamatrix-Codes, QR-Codes, Atztec-Codes und dergleichen ausgebildet sein.

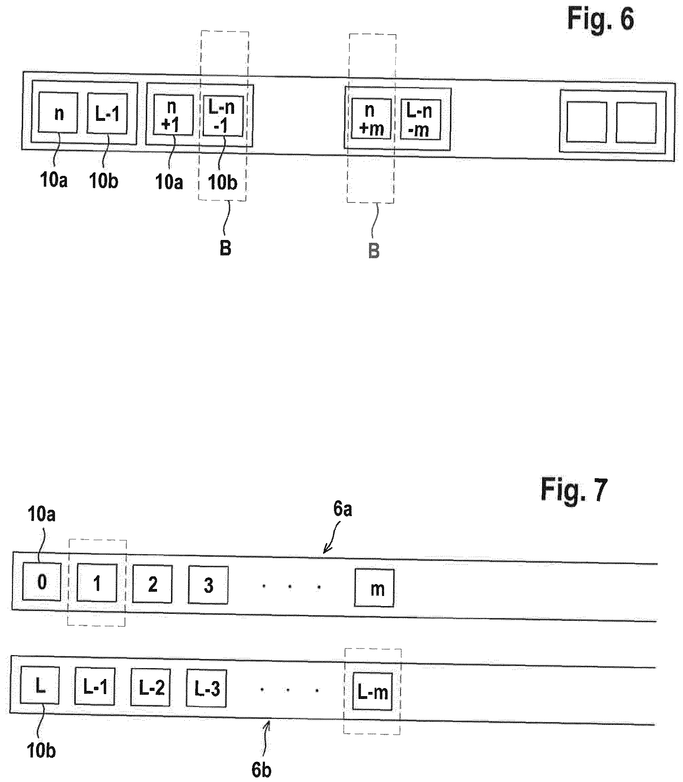

Bei dem nicht zur Erfindung gehörenden Beispiel gemäß Figur 6 sind die Positionsmarken 10a des ersten Positionsmaßsystems 6a und die Positionsmarken 10b des zweiten Positionsmaßsystems 6b in einer Linearanordnung vorgesehen, wobei die Positionsmarken 10a, 10b immer paarweise nebeneinander angeordnet sind. Die Positionssensoren 4a, 4b sind in Abstand hintereinander angeordnet, so dass mit dem Positionssensor 4a Positionsmarken 10a in einem Detektionsbereich A und zeitgleich mit dem Positionssensor 4b Positionsmarken 10b in einem Detektionsbereich B erfasst werden. Aus den zeitgleich erfassten Positionsmesswerten für ein Paar von Positionsmarken 10a, 10b wird dann die Summe der Positionsmesswerte als Verrechnungsgröße gebildet.

Bei dem nicht zur Erfindung gehörenden Beispiel gemäß Figur 7 sind auf einem Positionsmaßband auf dessen Vorderseite ein erstes Positionsmaßsystem 6a bildende Positionsmarken 10a vorgesehen (obere Reihe in Figur 7), welche wieder als Barcodes ausgebildet sind und von einem Positionssensor 4a in Form eines optischen Sensors gelesen werden. Auf der Rückseite des Positionsmaßbandes ist eine Reihenanordnung von Positionsmarken 10b vorgesehen, die ein zweites Positionsmaßsystem 6b ausbilden, wobei die Positionsmarken 10b von Transpondern in Form von RFID-Tags ausgebildet sind. Diese Positionsmarken 10b werden von einem Positionssensor 4b gelesen, der eine elektromagnetische Wellen im Funk- oder Radarbereich emittierende Sende-/Empfangseinheit aufweist.

Analog zu den vorigen nicht zur Erfindung gehörenden Beispielen sind in den Positionsmarken 10a als Positionsinformationen Nummern in aufsteigender Reihenfolge kodiert, wogegen in den Positionsmarken 10b als Positionsinformationen Nummern in fallender Reihenfolge kodiert sind. Die Positionssensoren 4a, 4b erfassen immer zeitgleich ein Paar von Positionsmarken 10a, 10b, die an der Vorder- und Rückseite des Positionsmaßbandes gegenüberliegend angeordnet sind. Die dabei erfasste Summe der Positionsmesswerte ist konstant und wird als Verrechnungsgröße kontrolliert.

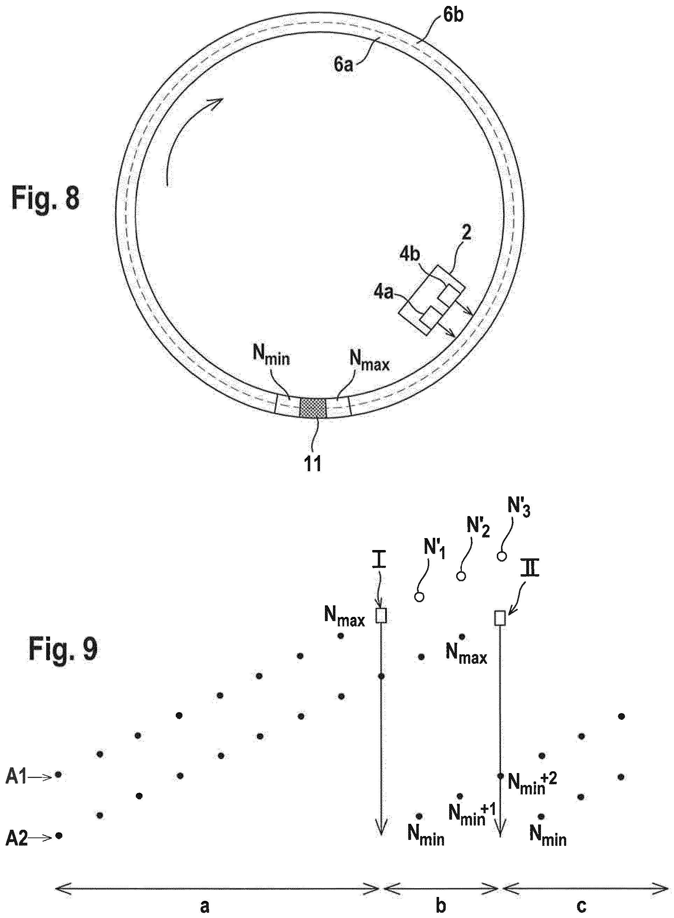

Figur 8 zeigt eine Variante des nicht zur Erfindung gehörenden Beispiels von Figur 3 derart, dass die Positionsmaßsysteme 6a, 6b ringförmig angeordnet sind. Die Positionsmarken 10a, 10b enthalten jeweils identische Nummern als Positionsinformationen, die in der mit dem Pfeil gekennzeichneter Richtung von einem Wert Nₘᵢₙ bis auf einen Wert Nₘₐₓ ansteigen. An der Nahtstelle zwischen den Positionsmarken 10a, 10b mit den Wert Nₘᵢₙ, Nₘₐₓ befindet sich eine Offset Marke 11.

In Figur 8 ist weiterhin das Fahrzeug 2 mit den Positionssensoren 4a, 4b dargestellt, das in Pfeilrichtung umläuft. In der in Figur 8 dargestellten Position läuft das Fahrzeug 2 auf die Positionsmarken 10a, 10b mit den Maximalwerten Nₘₐₓ zu. Dies entspricht den in Figur 9 dargestellten Bereich der mit den Positionssensoren 4a, 4b aufgenommenen Positionsmesswerten, wobei die mit A1 bezeichnete Folge der Positionsmesswerte vom Positionssensor 4a stammt und die mit A2 bezeichnete Folge der Positionsmessung vom Positionssensor 4b stammt. Die von Zahlenfolgen gebildeten Positionsmesswerte (A1, A2) nehmen dabei in regelmäßigen Schritten zu. Die Differenz der Positionsmesswerte ist dabei konstant und wird als Verrechnungsgröße kontrolliert.

Mit dem Positionssensor 4a wird nach der Detektion der Positionsmarke 10a mit dem Maximalwert Nₘₐₓ die Offset Marke detektiert. Dies meldet der Positionssensor 4a über den Schaltausgang O1 an den Positionssensor 4b. Bei der nächsten Abtastung des Positionssensors 4a registriert dieser die Positionsmarke 10a mit dem Wert Nₘᵢₙ. Aus der Differenz Nₘₐₓ- Nₘᵢₙ wird ein Offset gebildet. Die darauf mit dem Positionssensor 4a ermittelten Positionsmarken Nₘᵢₙ + 1, Nₘᵢₙ + 2 weisen wie der Positionsmesswert Nₘᵢₙ einen Sprung gegenüber dem Positionsmesswert im Bereich a auf, so dass damit die Differenz der Positionsmesswerte der Positionssensoren 4a, 4b im Bereich b, also solange mit den Positionssensoren 4b die Offset Marke noch nicht detektiert wurde, nicht mehr konstant ist. Um auch im Bereich b die Differenz des Positionsmesswertes als konstante Verrechnungsgröße zur Verfügung zu haben, werden die Positionsmesswerte des Positionssensors 4a mit dem Offset renormiert. Diese renormierten Positionsmesswerte (in Figur 9 mit N₁', N₂', N₃' bezeichnet) werden zur Differenzbildung mit den Positionsmesswerten des Positionssensors 4b herangezogen, wodurch eine konstante Differenz von Positionsmesswerten als Verrechnungsgröße erhalten wird.

Sobald dann die Offset Marke auch mit dem zweiten Positionssensor 4b erkannt wurde, meldet dies der Positionssensor 4b über den Schaltausgang O2 dem ersten Positionssensor 4a. Dann können für die Differenzbildung wieder die unmittelbar mit dem ersten Positionssensor 4 und dem zweiten Positionssensor 4b ermittelten Positionsmesswerte (das heißt ohne Renormierung mit dem Offset) herangezogen werden (Bereich c in Figur 9).

Bei einer Ausführungsform der erfindungsgemäßen Sensoranordnung 1 sind auf einem Fahrzeug 2 zwei Positionssensoren 4a, 4b fest angeordnet, so dass deren Lichtstrahlen 5a, 5b in entgegengesetzter Richtung verlaufen und jeweils auf ein kooperatives Ziel in Form einer Zielmarke 15a, 15b gerichtet sind. Mit jedem Positionssensor 4a, 4b wird dabei fortlaufend dessen Abstand zur zugeordneten Zielmarke ermittelt. Die Summe der Abstände, die mit den beiden Positionssensoren 4a, 4b ermittelt wird, ist konstant.

### Bezugszeichenliste

- (1): Sensoranordnung
- (2): Fahrzeug
- (3): Gegenstand
- (4a, 4b): Positionssensor
- (5a, 5b): Lichtstrahlen
- (6a, 6b): Positionsmaßsystem
- (7): Steuereinheit
- (8a, 8b): Schnittstelle
- (9a, 9b): Datenleitung
- (10a, 10b): Positionsmarke
- (11): Offset Marke

## Patentansprüche

1. Sensoranordnung (1) mit einem ersten Positionssensor (4a) und einem diesem zugeordneten ersten kooperativem Ziel, welche einen Erfassungsbereich begrenzen, wobei durch Positionsmessungen mit dem ersten Positionssensor (4a) gegen das erste kooperative Ziel erste Positionsmesswerte erhalten werden, und mit einem zweiten Positionssensor (4b) und einem diesem zugeordnete zweite kooperative Ziel, welche den Erfassungsbereich begrenzen, wobei durch Positionsmessungen mit dem zweiten Positionssensor (4b) gegen das zweite kooperative Ziel zweite Positionsmesswerte erhalten werden, **dadurch gekennzeichnet, dass** die Sensoranordnung (1) eine Steuereinheit (7) beinhaltet, die dazu eingerichtet ist die ersten und zweiten Positionsmesswerte der beiden Positionssensoren (4a, 4b) zu einer Verrechnungsgröße zu verrechnen, wobei anhand der Verrechnungsgröße die Funktion der Positionssensoren (4a, 4b) kontrolliert wird, wobei die Positionssensoren (4a, 4b) unabhängig voneinander arbeiten, wobei die Positionssensoren (4a, 4b) von nach einem Phasenmessverfahren oder nach einem Pulslaufzeitverfahren arbeitenden identisch ausgebildeten Distanzsensoren gebildet sind, mittels derer Distanzmessungen gegen das jeweilige kooperative Ziel durchgeführt werden, wodurch mit den Distanzsensoren als Erfassungsbereich eine Messstrecke kontrolliert wird, wobei die Distanzsensoren wahlweise auf derselben Seite oder auf gegenüberliegenden Seiten der Messstrecke angeordnet sein können.

2. Sensoranordnung nach Anspruch 1, **dadurch gekennzeichnet, dass** die Verrechnungsgröße die Summe oder die Differenz des ersten und zweiten Positionsmesswertes ist.

3. Sensoranordnung nach einem der Ansprüche 1 bis 2, **dadurch gekennzeichnet, dass** eine fehlerfreie Funktion des Positionssensors (4a) gegeben ist, wenn die Verrechnungsgröße innerhalb eines vorgegebenen Toleranzbandes zeitlich konstant ist.

4. Sensoranordnung nach einem der Ansprüche 1 bis 3, **dadurch gekennzeichnet, dass** wenigstens ein Positionssensor (4a) von einem optischen Sensor gebildet ist, welcher Lichtstrahlen (5a, 5b) emittiert und empfängt.

5. Sensoranordnung nach Anspruch 4, **dadurch gekennzeichnet, dass** das kooperative Ziel wenigstens ein Reflektor ist.

6. Sensoranordnung nach einem der Ansprüche 1 bis 5, **dadurch gekennzeichnet, dass** die Steuereinheit (7) von einer Rechnereinheit oder einem Frequenzumrichter gebildet ist.

7. Sensoranordnung nach Anspruch 6, **dadurch gekennzeichnet, dass** die Positionssensoren (4a, 4b) über gleiche oder unterschiedliche Schnittstellen (8a, 8b) an die Steuereinheit (7) angeschlossen sind.

8. Sensoranordnung nach einem der Ansprüche 1 bis 7, **dadurch gekennzeichnet, dass** die Positionsmaßsysteme (6a, 6b) stationär angeordnet sind, und dass die Positionssensoren (4a, 4b) auf einem Fahrzeug (2) angeordnet sind.

## Claims

1. A sensor assembly (1) having a first position sensor (4a) and a first cooperative target assigned to it, which limit a detection range, first position measurement values being obtained by position measurements with the first position sensor (4a) against the first cooperative target, and having a second position sensor (4b) and a second cooperative target assigned to it, which limit the detection range, second position measurement values being obtained by position measurements with the second position sensor (4b) against the second cooperative target, **characterised in that** the sensor assembly (1) contains a control unit (7) which is set up to combine the first and second position values of the two position sensors (4a, 4b) to form an accounting variable, 4b) to form a calculated variable, the function of the position sensors (4a, 4b) being controlled by means of the calculated variable, the position sensors (4a, 4b) operating independently of one another, the position sensors (4a, 4b) being formed by identically designed distance sensors operating according to a phase measurement method or according to a pulse delay method, by means of which distance measurements are carried out against the respective cooperative target, whereby a measuring path is controlled with the distance sensors as the detection range, wherein the distance sensors can optionally be arranged on the same side or on opposite sides of the measuring path.

2. The sensor assembly according to claim 1, **characterised in that** the calculation variable is the sum or the difference of the first and second position measurement values.

3. The sensor assembly according to one of the claims 1 to 2, **characterised in that** an error-free function of the position sensor (4a) is given is given if the calculation variable is constant in time within a predetermined tolerance band.

4. The sensor assembly according to one of claims 1 to 3, **characterised in that** at least one position sensor (4a) is formed by an optical sensor which emits and receives light beams (5a, 5b).

5. The sensor assembly according to claim 4, **characterised in that** the cooperating target is at least one reflector.

6. The sensor assembly according to one of claims 1 to 5, **characterised in that** the control unit (7) is formed by a computer unit or a frequency converter.

7. The sensor assembly according to claim 6, **characterised in that** the position sensors (4a, 4b) are connected to the control unit (7) via identical or different interfaces (8a, 8b).

8. The sensor assembly according to one of the claims 1 to 7, **characterised in that** the position sensors (4a, 4b) are arranged on a vehicle (2).

## Revendications

1. Système de détection (1) comportant un premier capteur de position (4a) et une première cible coopérative qui lui sont affectés, qui limitent une portée de détection, les premières valeurs de mesure de position étant obtenues par des mesures de position avec le premier capteur de position (4a) par rapport à la première cible coopérative, et comportant un second capteur de position (4b) et une seconde cible coopérative qui lui sont affectés, qui limitent la portée de détection, des seconds valeurs de mesure de position étant obtenues par des mesures de position avec le second capteur de position (4b) contre la seconde cible coopérante, **caractérisé en ce que** le système de détection (1) contient une unité de commande (7) qui est conçue pour combiner les premières et seconds valeurs de position des deux capteurs de position (4a), 4b) pour former une variable de comptabilisation, 4b) pour former une variable calculée, la fonction des capteurs de position (4a, 4b) étant commandée au moyen de la variable calculée, les capteurs de position (4a, 4b) fonctionnant indépendamment les uns des autres, les capteurs de position (4a, 4b) étant formés par des capteurs de distance de conception identique fonctionnant selon un procédé de mesure de phase ou selon un procédé de retardement d'impulsion, au moyen duquel des mesures de distance sont effectuées par rapport à la cible coopérative respective, un trajet de mesure étant commandé avec les capteurs de distance comme zone de détection, les capteurs de distance pouvant être disposés au choix du même côté ou de côtés opposés du trajet de mesure.

2. Système de détection selon la revendication 1, **caractérisé en ce que** la variable de calcul est la somme ou la différence des première et seconde valeurs de mesure de la position.

3. Système de détection selon l'une des revendications 1 à 2, **caractérisé en ce qu'**une fonction sans erreur du capteur de position (4a) est donnée si la variable de calcul est constante dans le temps dans une bande de tolérance prédéterminée.

4. Système de détection selon l'une des revendications 1 à 3, **caractérisé en ce qu'**au moins un capteur de position (4a) est formé par un capteur optique qui émet et reçoit des faisceaux lumineux (5a, 5b).

5. Système de détection selon la revendication 4, **caractérisé en ce que** la cible coopérante est au moins un réflecteur.

6. Système de détection selon l'une des revendications 1 à 5, **caractérisé en ce que** l'unité de commande (7) est constituée d'une unité informatique ou d'un convertisseur de fréquence.

7. Système de détection selon la revendication 6, **caractérisé en ce que** les capteurs de position (4a, 4b) sont reliés à l'unité de commande (7) par des interfaces identiques ou différentes (8a, 8b).

8. Système de détection selon l'une des revendications 1 à 7, **caractérisé en ce que** les capteurs de position (4a, 4b) sont disposés sur un véhicule (2).
